# EUROPEAN PATENT APPLICATION

(11) **EP 2 418 253 A1**
(43) Date of publication of application: **15.02.2012**
(21) Application number: 10761662.5
(22) Date of filing: 05.04.2010
(51) Int. Cl.: C08L 69/00, C08G 64/16, C08K 5/103, C08K 5/13, G02B 1/04

(54) **POLYCARBONATE RESIN COMPOSITION, PROCESS FOR PRODUCING MOLDED ARTICLE THEREFROM, AND OPTICAL LENS**

(30) Priority: 06.04.2009 JP 2009091866
(71) Applicant: Mitsubishi Gas Chemical Company, Inc., Tokyo 100-8324 (JP)
(72) Inventor: YOSHIDA Shu, Tokyo 125-0051 (JP); KATO Noriyuki, Tokyo 125-0051 (JP); FURUHASHI Hiroki, Tokyo 125-0051 (JP); KANEKO Kazuaki, Tokyo 125-0051 (JP); KAMEYAMA Keiichi, Tokyo 125-0051 (JP)
(74) Representative: HOFFMANN EITLE
(86) International application number: PCT/JP2010/056149
(87) International publication number: WO 2010/116963

(57) **Abstract**

To provide a thermoplastic polymer composition excellent in molding.

Disclosed is a thermoplastic polymer composition comprising A) a polycarbonate copolymer which is produced according to a melt method without adding any quencher, which comprises constitution units of (1) and (2), B) a mold release which is a partial ester formed of a C₁₀₋₂₀ monovalent fatty acid and glycerol, and C) a hindered phenol antioxidant.

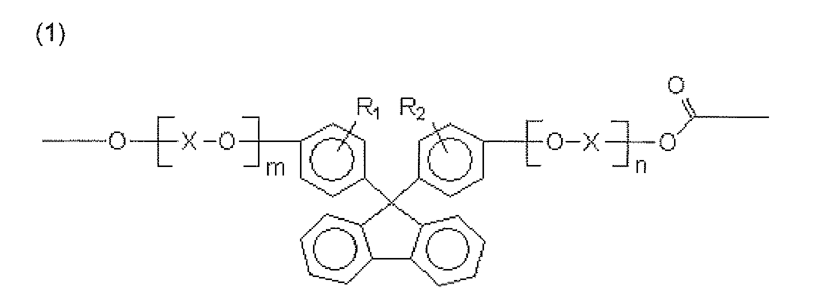

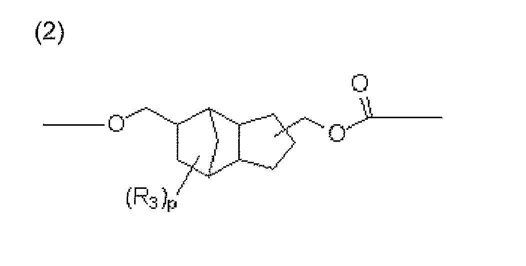

## Description

### TECHNICAL FIELD

The present invention relates to a thermoplastic polymer composition containing a predetermined polycarbonate copolymer. More specifically, the present invention relates to a thermoplastic polymer composition suitable for use in the applications such as lenses, prisms, sheets and films to which transparency and hue-stability are required, which has a good hue-stability during molding and a good mold release property required in producing accurate molded products, and also contributes to reducing the dirt of a metallic mold during a continuous molding; and the present invention relates also to a molded product formed of the thermoplastic polymer composition.

### BACKGROUND ART

Polycarbonates are excellent in not only mechanical properties such as impact resistance but also heat resistance and transparency, and have been used in various lenses, prisms, optical disk-substrates or the like as an optical material. Among these, a polycarbonate copolymer having an aliphatic group hardly develops birefringence, and can be used widely as various optical materials (Patent Document 1).

High transparency and hue are required for molded products in the application such as lenses and optical disks. Retention-stability, especially heat resistance or hue-stability, is required for the polymer composition which is used for producing them; and moldability during molding, or transferring-ability capable of forming an accurate molded product having a shape and size as being designed, is also required for the polymer composition.

In a process for producing polycarbonate using a melt method via an interesterification reaction, usually, an alkali metal compound or the like is used as an interesterification catalyst. Since the catalyst causes coloration during melt-molding, and reduction in the molecular weight, the method wherein an acid compound such as sulfonic ester is added to the interesterification catalyst for neutralizing and deactivating the interesterification catalyst is usually used (Patent Document 2).

### PRIORART DOCUMENTS

### PATENT DOCUMENTS

[Patent Document 1] JP-A-2005-146140
[Patent Document 2] JP-A-7-165905

### DISCLOSURE OF THE INVENTION

### PROBLEMS TO BE RESOLVED BY THE INVENTION

However, the present inventors conducted studies and, as a result, found that, when a polymer composition, prepared by adding a fatty-acid ester-base mold release to the polycarbonate copolymer having an aliphatic group disclosed in Patent Document 1, was molded into an accurate molded product, the mold release provoked a side reaction such as decomposition during molding, which couldn't produce the expected release ability, caused deformation and coloration of the molded product, and gave significant dirt on the surface of the metallic mold in the molding machine. Especially, these problems often occurred in molding into micro lenses having a complicated structure.
One object of the present invention is to provide a composition, containing a polycarbonate copolymer having the aliphatic group, which has a good stability in a molding process, is hardly colored due to decomposition during melt-molding, causes little dirt of a metallic mold when being subjected to a metallic molding, has a good release ability from a metallic mold, and is suitable for use in producing accurate molded products, and a molded product using it.

### MEANS OF SOLVING THE PROBLEMS

The present inventors conducted studies in order to solve the above-described problems, and, as a result, found that a quencher, which has been generally considered necessary for polycarbonates produced according to a melt method, was one of the factors causing the dirt of a metallic mold. On the basis of this finding, they further conducted studies, and, as a result, found that it was possible to solve the above-described problems according to a composition comprising a mold release of a partial ester, which is formed of a C₁₀₋₂₀ monovalent fatty acid and glycerol, and a hindered phenol antioxidant along with a polycarbonate copolymer having a predetermined aliphatic group which is produced according to a melt method without adding any quencher. On the basis of this finding, the present invention was made. More specifically, they found that, by using the polymer composition, coloration was prevented during a molding process, a high release ability was obtained, and little dirt occurred even if the molding process was carried out continuously for a long period, or, they found that the composition was suitable for use in a precision molding. That it is possible to maintain the melting-stability even without adding any quencher and to provide a thermoplastic polymer composition having a good mold releasability and causing little dirt of a metallic mold by combining the predetermined mold release and the predetermined antioxidant is unpredictable and surprising.

Namely, the means for solving the above-described problems are as follows.
[1] A thermoplastic polymer composition comprising:
   A) a polycarbonate copolymer which is produced according to a melt method without adding any quencher, which comprises 30 to 70 % by mole of a constitution unit represented by formula (1) and 70 to 30 % by mole of a constitution unit represented by formula (2), and of which weight-averaged molecular weight by GPC is from 15,000 to 65,000,
   B) at least one species of a mold release which is a partial ester formed of a C₁₀₋₂₀ monovalent fatty acid and glycerol, and
   C) at least one species of a hindered phenol antioxidant: 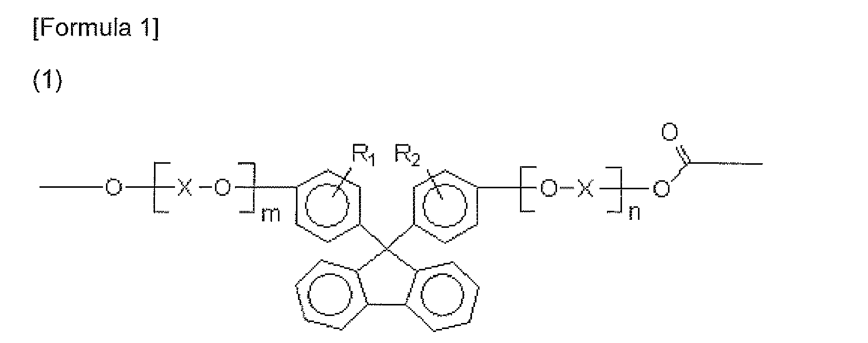 in formula (1), R¹ and R² each independently represent a hydrogen atom, C₁₋₁₀ alkyl group, C₆₋₁₀ cycloalkyl group or C₆₋₁₀ aryl group; X represents a C₂₋₆ alkylene group which may be branched, C₆₋₁₀ cycloalkylene group or C₆₋₁₀ arylene group; and m and n each independently indicate a numerical value of from 1 to 5; 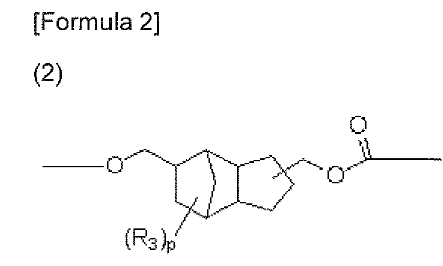 in formula (2), R³ represents a C₁₋₁₀ alkyl group, p indicates a numerical value of from 0 to 4, which indicates that p pieces of R³ may bond to any position of the tetracyclodecane ring.

[2] The thermoplastic polymer composition according to [1], wherein B) the at least one species of a mold release is a glycerol monostearate or glycerol mono laurate.
[3] The thermoplastic polymer composition according to [1] or [2], wherein C) the at least one species of a hindered phenol antioxidant is pentaerythrityl tetrakis[3-(3,5-di-t-butyl-4-hydroxyphenyl)propionate].
[4] The thermoplastic polymer composition according to any one of [1]-[3], comprising 0.001 to 0.5 parts by weight of B) the at least one species of a mold release with respect to 100 parts by weight of A) the polycarbonate copolymer.
[5] The thermoplastic polymer composition according to any one of [1]-[4], comprising 0.001 to 0.5 parts by weight of C) the at least one species of a hindered phenol antioxidant with respect to 100 parts by weight of A) the polycarbonate copolymer.
[6] A process for producing a molded product comprising using a thermoplastic polymer composition of any one of [1]-[5].
[7] An optical lens formed of a thermoplastic polymer composition of any one of [1] -[5].

### EFFECT OF THE INVENTION

The thermoplastic polymer composition of the present invention causes little coloration during a molding process, has a high mold releasability, causes little dirt of a metallic mold even if being subjected to a continuous and long-term molding, and is suitable for use in precision molding.

### MODE FOR CARRYING OUT THE INVENTION

The present invention is described in detail below. In this description, the numerical range expressed by the wording "a number - another lumber" means the range including the former and later numbers as lowermost and uppermost limits of the range respectively.

### 1. Thermoplastic Polymer Composition

### A) Polycarbonate Copolymer

The thermoplastic polymer composition of the invention contains A) a polycarbonate copolymer which is produced according to a melt method without adding any quencher, which comprises 30 to 70 % by mole of a constitution unit represented by formula (1) and 70 to 30 % by mole of a constitution unit represented by formula (2), and of which weight-averaged molecular weight by GPC is from 15,000 to 65,000.

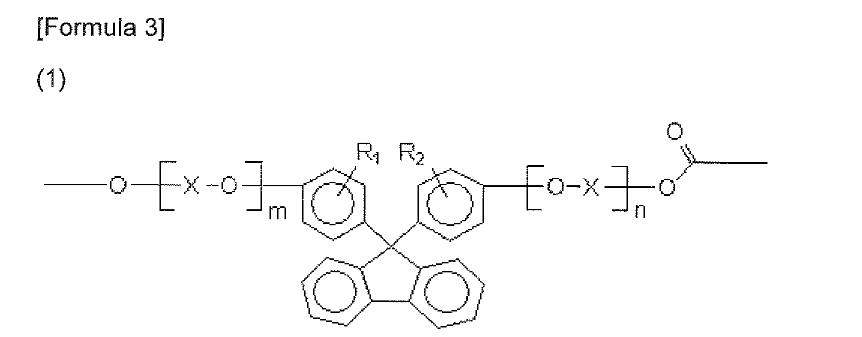

In formula (1), R¹ and R² each independently represent a hydrogen atom, C₁₋₁₀ alkyl group, C₆₋₁₀ cycloalkyl group or C₆₋₁₀ aryl group; X represents a C₂₋₆ alkylene group which may be branched, C₆₋₁₀ cycloalkylene group or C₆₋₁₀ arylene group; and m and n each independently indicate a numerical value of from 1 to 5.

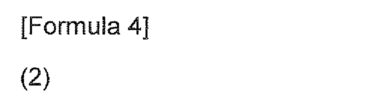

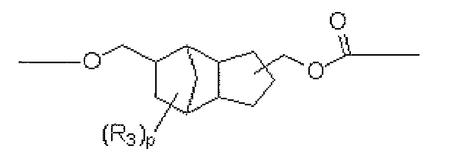

In formula (2), R³ represents a C₁-₁₀ alkyl group, p indicates a numerical value of from 0 to 4, which indicates that p pieces of R³ may bond to any position of the tetracyclodecane ring.

The constitution unit (1) is derived from any ether diol. Examples thereof include 9,9-bis (4-(2-hydroxy ethoxy)phenyl)fluorene, 9,9-bis (4-(2-hydroxy ethoxy)-2-mefihyl phenyl)fluorene, 9,9-bis (4-(2-hydroxy ethoxy)-3-methyl phenyl)fluorene, 9,9-bis (4-(2-hydroxy ethoxy)-2-ethyl phenyl)fluorene, 9,9-bis (4-(2-hydroxy ethoxy)-3-ethyl phenyl)fluorene, 9,9-bis (4-(2-hydroxy ethoxy)-2-isopropyl phenyl)fluorene, 9,9-bis (4-(2-hydroxy ethoxy)-2-isopropyl phenyl)fluorene, 9,9-bis (4-(2-hydroxy ethoxy)-3-isopropyl phenyl)fluorene, 9,9-bis (4-(2-hydroxy ethoxy)-2-isobutyl phenyl)fluorene, 9,9-bis (4-(2-hydroxy ethoxy)-3-isobutyl phenyl)fluorene, 9,9-bis (4-(2-hydroxy ethoxy)-3-tert-butyl phenyl)fluorene, 9,9-bis (4-(2-hydroxy ethoxy)-3-cyclohexyl phenyl)fluorene, 9,9-bis (4-(2-hydroxy ethoxy)-3-phenyl phenyl)fluorene, 9,9-bis (4-(2-hydroxy ethoxy)-3,5-dimethyl phenyl)fluorene, 9,9-bis (4-(2-hydroxy ethoxy)-3-tert-butyl-6-methyl phenyl)fluorene, 9,9-bis (4-(3-hydroxy-2,2-dimethyl propoxy)phenyl)fluorene, 9,9-bis (4-(6-hydroxy-3-oxapentyloxy)phenyl)fluorene, and 9,9-bis (4-(9-hydroxy-3,6-dioxaoctyloxy)phenyl)fluorene.

The constitution unit (2) is derived from any diol. Examples thereof include tricyclo [5.2.1.0^{2,6}]decane dimethanol, 4,10-dimethyl tricyclo [5.2.1.0^{2.6}] decane dimethanol, 4,4,10,10-tetramethyl tricyclo [5.2.1.0^{2,6}] decane dimethanol, and 1,2,3,4,5,6,7,8,9,10-decamethyl tricyclo [5.2.1.0^{2,6}] decane dimethanol.

The ratio (ratio by mole) of the constitution unit (1) and the constitution unit (2) in the polycarbonate copolymer is preferably from 30:70 to 70:30. In terms of low birefringence, the ratio is preferably from 40:60 to 55:45. Since practically, it is predicted that birefringence becomes lowest at the ratio of about 47:53, the polycarbonate copolymer having a ratio (ratio by mole) of the constitution unit (1) and the constitution unit (2) of from 45:55 to 50:50 is preferable in the applications in which low birefringence is required.

The polycarbonate copolymer may have a random-, block- or alternating-copolymerization structure. Furthermore, the polycarbonate copolymer may have a small amount of any constituting unit other than the constituting units (1) and (2).

The glass-transition temperature of the polycarbonate copolymer is preferably from about 95 degrees Celsius to about 165 degrees Celsius, or more preferably from about 105 degrees Celsius to about 165 degrees Celsius. When the glass-transition temperature is lower than 95 degrees Celsius, the heat resistance may tend to be decreased, which may sometimes result in limiting the usage environment of the polycarbonate copolymer. When the glass-transition temperature is higher than 165 degrees Celsius, the flowability may tend to be decreased, which may result in requiring the stricter conditions during molding, and if the molecular weight of the polycarbonate copolymer is adjusted to the small range to maintain the flowability, it may become fragile.

The weight-averaged molecular weight (as a polystyrene-equivalent value) by GPC of the polycarbonate copolymer is preferably from 15,000 to 65,000. When the weight-averaged molecular weight is smaller than 15,000, the impact resistance may tend to be decreased; and when the weight-averaged molecular weight is more than 65,000, the flowability may tend to be decreased, which may result in requiring the stricter conditions during molding.

According to the present invention, the polycarbonate copolymer produced according to a melt method is used. For example, the polycarbonate copolymer may be produced from an ether diol to derive the constitution unit (1), a diol to derive the constitution unit (2) and diester carbonate to derive carbonate bonds. One example of the melt method is a method in which an ether diol to derive the constitution unit (1), a diol to derive the constitution unit (2) and diester carbonate to derive carbonate bonds are subjected to a fusion-polycondensation in a presence of a basic compound catalyst, interesterification catalyst, or mixed catalyst of both of them.

Examples of the ether diol to derive the constitution unit (1) and the diol to derive the constitution (2) are exemplified above.
Examples of the diester carbonate include diphenyl carbonate, di tolyl carbonate, bis (chlorophenyl)carbonate, m-cresyl carbonate, dimethyl carbonate, diethyl carbonate, dibutyl carbonate, and dicyclohexyl carbonate. Among these, diphenyl carbonate is preferable especially. The diphenyl carbonate is preferably used by a ratio of 0.97 to 1.10 moles, or more preferably 0.98 to 1.05 moles, with respect to 1 mole of the dihydroxy compound.

Alkali metal compounds and/or alkali earth metal compounds, nitrogen-containing compounds and the like are exemplified as an example of the basic compound catalyst. Among these, organic acid salts, inorganic salts, oxides, hydroxy compounds, hydrides and alkoxides of alkali metals and alkali-earth metals; quaternary ammonium hydroxides and salts thereof, amines and the like are used preferably; and such compounds may be used singly or in combination of two or more thereof.

In particular, sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium borophenylate; sodium benzoate, potassium benzoate, cesium benzoate, lithium benzoate, disodium hydrogenphosphate, dipotassium hydrogenphosphate, dilitthium hydrogenphosphate, disodium phenylphosphate, disodium, dipotassium, dicesium and dilithium salts of bisphenol A, and sodium, potassium, cesium and lithium salts of phenol may be used as the alkali metal compound.

In particular, magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium carbonate, calcium carbonate, strontium carbonate, barium carbonate, magnesium acetate, calcium acetate, strontium acetate, barium acetate, magnesium stearate, calcium stearate, calcium benzoate, and magnesium phenylphosphate may be used as the alkaline-earth metal compound.

In particular, quaternary ammonium hydroxides having an alkyl or aryl such as tetramethylammonium hydroxide, tetraethylammonium hydroxide, tetrapropylammonium hydroxide, tetrabutylammonium hydroxide and trimethylbenzylammonium hydroxide; tertiary amines such as triethyl amine, dimethyl benzyl amine and triphenyl amine; secondary amines such as diethyl amine and dibutyl amine; primary amines such as propyl amine and butyl amine; imidazoles such as 2-methyl imidazole, 2-phenyl imidazole and benzoimidazole; and bases or basic salts such as ammonia, tetramethylammonium borohydride, tetrabutylammonium borohydride, tetrabutylammonium tetraphenylborate and tetraphenylammonium tetraphenylborate may be used as the nitrogen-containing compound.

As the interesterification catalyst, zinc salts, tin salts, zirconium salts and lead salts are preferable; and they may be used singly or in combination of two or more thereof.
In particular, zinc acetate, zinc benzoate, zinc 2-ethylhexanate, tin(II) chloride, tin(IV) chloride, tin(II) acetate, tin(IV) acetate, dibutyltin dilaurate, dibutyltin oxide, dibutyltin dimethoxide, zirconium acetylacetonato, zirconium oxyacetate, zirconium tetrabutoxide, lead(II) acetate and lead(IV) acetate are exemplified as an example of the interesterification catalyst.

The catalyst may be used in an amount of generally from 10⁻⁹ to 10⁻³ moles or so relative to 1 mol of the total of the dihydroxy compound, preferably from 10⁻⁷ to 10⁻⁴ moles or so.

According to a melt method, the melt-copolymerization of the raw materials and the catalyst is carried out under heat and under normal pressure or reduced pressure by interesterification along with removing the side product. The reaction is usually carried out according to a multistage process including two or more stages.
Specifically, the first stage reaction is carried out at a temperature of 120 to 220 degrees Celsius (preferably from 160 to 200 degrees Celsius) for 0.1 to 5 hours (preferably for 0.5 to 3 hours) under normal pressure to a pressure of 200 Torr. Next, the temperature is gradually elevated up to a final temperature of from 230 to 260 degrees Celsius while the pressure is gradually reduced to a final pressure of at most 1 Torr, for 1 to 3 hours, and the reaction is carried out continuously. Finally, under the reduced pressure of at most 1 Torr, the polycondensation is promoted at a temperature of from 230 to 260 degrees Celsius, and after the reactor comes to have a predetermined viscosity, the pressure in the system is recovered by nitrogen, and the reaction is thus finished. The reaction time carried out under at most 1 Torr is from 0.1 to 2 hours, and the overall reaction time is from 1 to 6 hours, generally from 2 to 5 hours.

Such a reaction may be carried out in a continuous method or a batchwise method. The reaction apparatus to be used for the above-mentioned reaction may be a vertical reactor equipped with an anchor-type stirring impeller, a Maxblend stirring impeller, a helical ribbon-type stirring impeller or the like, may be a horizontal reactor equipped with a paddle impeller, a lattice impeller, an eyeglass impeller or the like, or may be a extruder-type equipped with a screw. A reaction apparatus constructed by suitably combining these reactors in consideration of the viscosity of the polymer product is preferably used.

Usually, in a melt method, with the aim of deactivating the catalyst, any quencher is added to the reactor at the end of the reaction. Examples of the quencher include ammonium salts of sulfonic acid, phosphonium salts of sulfonic acid, and esters of sulfonic acid. Usually, for this purpose, 0.0001 to 0.5 parts by mass of the quencher is added with respect to 100 parts by weight of the produced polycarbonate copolymer. In the description, "without adding any quencher" means that any quencher is not added in an amount sufficient for deactivation of the catalyst. Accordingly, any embodiments, wherein any quencher is added in an amount extremely smaller than the above-described range or in an amount insufficient for deactivation of the catalyst, fall within the scope of the present invention. The embodiment wherein a smaller amount of the quencher is added is more preferable; and the embodiment wherein any quencher is not added at all is most preferable.

### B) Mold Release

The thermoplastic polymer composition of the present invention contains B) at least one species of a mold release (occasionally, referred to as "fatty acid ester-base mold release" hereinafter) which is a partial ester formed of a C₁₀₋₂₀ monovalent fatty acid and glycerol. The term "C₁₀₋₂₀ monovalent fatty acid" means a fatty acid having a C₁₀₋₂₀ aliphatic group other than COOH. For example, capric acid (C₉H₁₉COOH), having a C₉-aliphatic group, doesn't fall within the scope of the C₁₀₋₂₀-monovalent fatty acid; and behenic acid (C₂₁ H₄₃COOH), having a C₂₁-aliphatic group, doesn't fall within the scope of the C₁₀₋₂₀-monovalent fatty acid. When a partial ester, which is formed of a monovalent fatty acid having more than 20 carbon atoms and glycerol, is used as a fatty acid ester-base mold release, the dirt may occur in the metal mold during molding. On the other hand, a partial ester, which is formed of a monovalent fatty acid having less than 10 carbon atoms and glycerol, may not function as a mold release. Examples of the C₁₀₋₂₀ monovalent fatty acid include lauric acid, palmitic acid and stearic acid. The monovalent fatty acid may have a substituent other than carboxyl, and examples thereof include hydroxy. Preferable examples of the fatty acid ester-base mold release include an ester of glycerol and lauric acid, palmitic acid, stearic acid, or hydroxy fatty acid thereof. More preferable examples of the fatty acid ester-base mold release include an ester of glycerol and lauric acid. These esters are partial esters in which one or two hydroxyls of three hydroxyls in glycerol are esterized. Mono esters are preferable.
The fatty acid ester-base mold release may be used singly or in combination of two or more thereof.

0.001 to 0.5 parts by weight of B) the fatty acid ester-base mold release is preferably added with respect to 100 parts by weight of A) the polycarbonate copolymer. When it is smaller than 0.001 parts by weight, the mold release effect may not be obtained sufficiently; and when it is more than 0.5 parts by weight, the problems such as coloration of the composition and reduction of molecular weight may be caused.

### C) Antioxidant

The thermoplastic polymer composition of the present invention contains C) at least one species of a hindered phenol antioxidant. Examples of the hindered phenol which can be used as an oxidant include 1,1,3-tris (2-methyl-4-hydroxy-5-t-butyl phenyl)butane, 4,4'-butylidene bis (3-methyl-6-t-butyl phenol), n-octadecyl-3-(3',5'-di-t-butyl-4'-hydroxy phenyl) propionate, pentaerythrityl-tetrakis (3-(3,5-di-t-butyl-4-hydroxy phenyl) propioate), 2,2'-methylene bis (4-methyl-6-t-butyl phenol), 2,2'-methylene bis (4-ethyl-6-t-butyl phenol), 2-t-butyl-6-(3-t-butyl-2-hydroxy-5-methyl benzyl)-4-methylphenyl acrylate, 2-(1-(2-hydroxy-3,5-di-t-pentyl phenyl) ethyl) 4-,6-di-t-pentyl phenyl acrylate, 4,4-thio bis (3-methyl-6-t-butyl phenol), 1,3,5-trimethyl-2,4,6-tris (3,5-di-t-butyl-4-hydroxy benzyl) benzene, 2,2-thio-diethylene bis (3-(3,5-di t-butyl-4-hydroxy phenyl) propionate, and 3,9-bis (2-(3-(3-t-butyl-4-hydroxy-5-methyl phenyl)-propionyloxy)-1,1-dimethyl)-2,4,8,10-tetraoxa spiro (5.5)undecane. Any other agents, which have been known as a hindered phenol antioxidant, can also be used.
The hindered phenol antioxidant may be used singly or in combination of two or more thereof.

0.001 to 0.5 parts by weight of C) the hindered phenol antioxidant is preferably added with respect to 100 parts by weight of A) the polycarbonate copolymer. When it is smaller than 0.001 parts by weight, the effect of preventing coloration during retention may not be obtained sufficiently; and when it is more than 0.5 parts by weight, the problems such as coloration of the composition and reduction of molecular weight may be caused.

The time that B) the fatty acid ester-base mold release and C) the hindered phenol antioxidant are added is not limited. For example, they may be added to A) the polycarbonate copolymer which is still in a melting state after the fusion-polycondensation, or they may be added to A) the polycarbonate copolymer which is pelletized already. If they are added to A) the polycarbonate copolymer still in a melting state just after the fusion-polycondensation is finished, the method, comprising adding them to the polymer extracted from a reaction pot, feeding the mixture into a transverse mixing machine, then mixing it uniformly, and then pelletizing it directly, is preferably used, or the method, comprising feeding the polymer extracted from a reaction pot into a transverse mixing machine, adding them to the extracted polycarbonate copolymer via re-feeding on the way to the mixing machine, mixing them uniformly, and then pelletizing the uniform mixture directly, is preferably used.

The method for adding B) the fatty acid ester-base mold release and C) the hindered phenol antioxidant is also not limited. For example, the method of adding any master batch thereof which is prepared previously may be used, the method of adding any solution which is prepared by dissolving them in an organic solvent or water may be used, or the method of adding them directly without using any master batch or solvent may be used.

The thermoplastic polymer composition of the invention may comprise, without departing from the spirit of the present invention, one or more additives to give any desired property such as ultraviolet absorbers, fluorescent whiteners, photostabilizers, lubricants, fire-retardants, fire-retardant aids, improvers of impact resistance, antistatic agents, plasticizers, compatibilizing-agents, colorants (including pigments such as carbon black and titanium dioxide, and dyes such as bluing agent), stiffeners including glass fibers, glass beads, glass flakes, carbon fibers, fibrous magnesium, potassium titanate whisker, ceramic whisker, mica, talc, clay, and calcium silicate, fillers, and other polymers.

### 2. Molded Product And Process For Producing It

The present invention relates also to a molded product produced using the thermoplastic polymer composition of the present invention, and to a process for producing it. A) the polycarbonate copolymer contained in the thermoplastic polymer composition of the present invention is low birefringence. Therefore, it is useful in preparation of molded products to be used in an optical application such as pickup lenses, optical lenses, optical prisms, optical sheets, optical films, light guide plates and optical disks. The thermoplastic polymer composition of the present invention is excellent in moldability, and, more specifically, the thermoplastic polymer composition of the present invention exhibits a high heat resistance in a molding process (or it shows little coloration due to heat), is excellent in mold releasability, and hardly causes adhesion on a metal mold. Therefore, the thermoplastic polymer composition of the present invention is useful in preparation of accurate molded products having a complicated and precise shape, and especially, it is useful in preparation of micro lenses.

The molded product of the present invention may be produced according to any of various molding methods. More specifically, the molding process such as injection molding, injection compression molding, extrusion molding, hollow molding, rotational molding, compression molding may be used. In terms of productivity, the molded products are preferably produced by using pallets, which are prepared from the polycarbonate copolymer composition once, according to any one of the above-described processes. Furthermore, the desired molded products may be produced by using sheet-like molded products, which are produced from the polycarbonate copolymer composition once, according to vacuum molding, compressed-air molding or the like.

The molded products of the present invention are expected to be used not only in optic application parts but also in wide variety of applications such as electro/electron/office OA automation machines, medical parts, architect/construction products or household products.

### EXAMPLES

The present invention will be illustrated in further detail with reference to several examples below, which are not intended to limit the scope of the present invention. The evaluations of the obtained polycarbonate compositions were carried out according to the following methods.
(1) Molecular Weight: Using GPC (Shodex GPC system 11), the weight-averaged molecular weights (as a polystyrene-equivalent value) were measured. As a developing solvent, chloroform was used.
(2) Hue: Specimens, 50mmϕ- and 3mm thickness-disk-like specimens, were prepared from the obtained pellets according to injection molding, and the YI (yellowness) values thereof were measured by using a chromoscope (TC-1800MK2; manufactured by Tokyo Denshoku Co., Lid.).
(3) Heat Resistance Test in A Molding Process: The pellets formed of the polymer compositions were retained in an injecting-molding cylinder (260 degrees Celsius) for 30 minutes, and then, the values of the injection-molded specimens (50mmϕ, 3mm thickness) were measured.
(4) Mold Releasability: Molding by an injection molding machine SG75 (manufactured by Sumitomo Heavy Industries Ltd.) and a cup-shaped anti-releasing metal mold under the condition of a cylinder temperature of 250 degrees Celsius, a metal-mold temperature of 70 degrees Celsius and an internal pressure of 400kgf/cm², the protrusion loads (kgf/cm²) applied to the protrusion pin were measured during molding into cup-shape molded products having a height of 20mm and a thickness of 4mm, and then, mold release resistances were calculated.
(5) The Dirt of Metal Mold: Molding was carried out 2000 shots by using a molding machine of Mini 7 (manufactured by Niigata Engineering Co., Ltd.) and a drop-shaped metal-mold under the condition of a cylinder temperature of 250 degrees Celsius, a molding cycle of 11 seconds, a metal mold temperature of 80 degrees Celsius and a mold clamping force of 7 tons. After completion of the continuous molding, the nesting parts corresponding to the molded product bodies (corresponding to the convex side surfaces of the molded products), which were disposed on the metal-mold movable side, were removed from the metal mold; then, the extraneous matters were removed from the metal mold by washing the surface portion thereof with methylene chloride, and methylene chloride was evaporated from the obtained methylene chloride solution.

### 1. Example 1

### 1.-1 Synthetic Examples of Polycarbonate Copolymer

10.11kg (23.05 moles) of 9,9-bis (4-(2-hydroxy ethoxy)phenyl)fluorene, 4.524kg (23.05 moles) of tricyclo [5.2.1.0^{2,6}]decane dimethanol, 10.22kg (47.71 moles) of diphenyl carbonate, and 0.01321g (1.572×10⁻⁴ mole) of sodium hydrogen carbonate were put into a 50L-reaction container equipped with a stirrer and a distillation apparatus, and were heated at 216 degrees Celsius under stirring under a nitrogen atmosphere of 760 Torr for an hour.
After that, the degree of decompression was adjusted to 150 Torr by taking 15 minutes, and then, interesterification was carried out under the condition of 215 degrees Celsius and 150 Torr kept for 20 minutes. Furthermore, the temperature was raised by 240 degrees Celsius at a rate of 37.5°C/hr, and 240 degrees Celsius and 150 Torr were kept for 10 minutes. After that, the pressure was adjusted to 120 Torr by spending 10 minutes, and 240 degrees Celsius and 120 Torr were kept for 70 minutes. After that, the pressure was adjusted to 100 Torr by spending 10 minutes, and 240 degrees Celsius and 100 Torr were kept for 10 minutes. After that, the pressure was adjusted to 1 Torr by spending 40 minutes, and the polymerization was carried out under stirring and under the condition of 240 degrees Celsius and 1 Torr for 25 minutes. After the completion of the polymerization, nitrogen gas was blown into the reaction container for pressurization, and the produced polycarbonate copolymer was extracted, and pelletized.
The Mw of the obtained polycarbonate copolymer was 46,000.

### 1-2 Preparation of Polycarbonate Composition

0.05 part by weight of pentaerythrityl tetrakis[3-(3,5-di-t-butyl-4-hydroxy phenyl)propionate] (trade name: IRGANOX1010, Ciba Specialty Chemicals K.K.), as a hindered phenol antioxidant, and 0.075 part by weight of glycerin monolaurate (trade name: Poem M300, RIKEN VITAMIN CO., LTD), as a mold release, were added to 100 parts by weight of the produced polycarbonate copolymer, and were compounded by a bent-type biaxial extruder (IPEC (completely-meshing and same-direction rotation) manufactured by Niigata Engineering Co., Ltd.), thereby to give a polycarbonate composition. The extrusion condition was that the discharge rate was 10kg/h, the screw rotation speed was 150rpm, the degree of vacuum in the bent was 3kPa, and the extrusion temperature from the first feed opening to the die portion was 260 degrees Celsius.
The YI value of the injection-molded specimen with a 3mm-thickness formed of the composition was 2.1. The YI value thereof was increased by +0.3 after being retained in the injection molding machine barrel for 30 minutes, which showed remarkably good heat resistance. The mold release resistance was quite good, and the dirt found on the metal mold was very small, 0.9 mg.

### [Examples 2-3]

Polycarbonate compositions were obtained respectively in the same manner as Example 1, except that the mold release and/or the hindered phenol antioxidant was replaced as shown in Table 1. Injection-molded specimens were produced by using the composition respectively under the condition as same as Example 1, and were evaluated. The evaluation results were shown in Table 1.

### [Comparative Example 1]

In synthesis of the polycarbonate copolymer of Example 1, dodecylbenzenesulfonic acid tetrabutyl phosphonium salt was added as a quencher along with the mold release and the hindered phenol antioxidant in an amount of 0.005 parts by weight with respect to 100 parts by weight of the polycarbonate copolymer. A polycarbonate composition was obtained in the same manner as Example 2, except that this polycarbonate copolymer was used. Using this composition, an injection-molded specimen was produced under the condition as same as Example 1, and was evaluated,
The YI value of the injection-molded specimen formed of this composition was 2.7. The YI value thereof was increased by +0.3 after being retained in the injection molding machine barrel for 30 minutes, which showed good heat resistance. However, the increase of the YI value after the retention was slightly large, 0.6; and the dirt found on the metal mold was large, 3.5 mg.

### [Comparative Examples 2-5]

Polycarbonate compositions were obtained respectively in the same manner as Example 1, except that the mold release and/or the hindered phenol antioxidant was replaced as shown in Table 1. Injection-molded specimens were produced by using the composition respectively under the condition as same as Example 1, and were evaluated. The evaluation results were shown in Table 1.
Not adding the antioxidant, the YI value was worsened remarkably. Using glycerol monobehenate, 0.1 part by weight thereof was insufficient for obtaining the mold releasability. However, when the amount thereof was increased to 0.2 part by weight, the dirt found on the metal mold was increased. Using glycerol monocaprate, 0.2 part by weight thereof was still insufficient for obtaining the mold releasability.

The symbols of the ingredients shown in Table 1 are respectively as follows. And the "amount" of each of the ingredients is indicated as a part by weight thereof with respect to 100 parts by weight of the A) ingredient (polycarbonate copolymer).
A) Ingredient (polycarbonate copolymer)
   PC : Polycarbonate copolymer produced in Example 1
   PC': Polycarbonate copolymer produced in Comparative Example 1
B) Ingredient (mold release)
   B-1: Glycerol monostearate (RIKEMAL S100A, RIKEN VITAMIN CO., LTD)
   B-2: Glycerol monolaurate (Poem M300, RIKEN VITAMIN CO., LTD)
   B-3: Glycerol monopalmitate (Poem PV100, RIKEN VITAMIN CO., LTD)
   B-4: Glycerol monobehenate (RIFCEMAL B100, RIKEN VITAMIN CO., LTD)
   B-5: Glycerol monocaprate (Poem M200, RIKEN VITAMIN CO., LTD)
C) Ingredient (hindered phenol antioxidant)
   C-1: pentaerythrityl tetrakis[3-(3,5-di-t-butyl-4-hydroxy phenyl)propionatej.: hindered phenol antioxidant (Irganox1010, Ciba Specialty Chemicals K.K.) Quencher
   DBSP: Dodecylbenzenesulfonic acid tetrabutyl phosphonium salt

**[Table 1]**

| | | | Example | | | Comparative Example | | | | |
|---|---|---|---|---|---|---|---|---|---|---|
| | | | 1 | 2 | 3 | 1 | 2 | 3 | 4 | 5 |
| | A) | | PC | PC | PC | PC' | PC | PC | PC | PC |
| | Quencher | Type | - | - | - | DBSP - | | - | - | - |
| | | Amount | - | - | - | 0.005 | - | - | - | - |
| Formulation | B) | Type | B-1 | B-2 | B-3 | B-2 | B-2 | B-4 | B-4 | B-5 |
| | | Amount | 0.075 | 0.075 | 0.075 | 0.075 | 0.075 | 0.1 | 0.2 | 0.2 |
| | C) | Type | C-1 | C-1 | C-1 | C-1 | - | C-1 | C-1 | C-1 |
| | | Amount | 0.05 | 0.05 | 0.05 | 0.05 | - | 0.05 | 0.05 | 0.05 |
| | YI | | 2.1 | 2.3 | 2.2 | 2.7 | 3.3 | 2.9 | 2.2 | 2.3 |
| | Mw after melting | | 44800 | 45100 | 44800 | 45300 | 43200 | 44800 | 44900 | 44500 |
| | Heat Resistance in Molding Process | | 0.3 | 0.1 | 0.2 | 0.6 | 3.1 | 0.2 | 0.3 | 0.3 |
| Evaluation Result | Mold Releasability Kgf/cm² | | 499 | 477 | 492 | 503 | 483 | 600 | 495 | 595 |
| | Dirt of Metal Mold (Amount of extraneous matter: mg) | | 0.9 | 1.7 | 0.9 | 3.5 | 1.3 | - | 4.3 | - |

## Claims

1. A thermoplastic polymer composition comprising:
A) a polycarbonate copolymer which is produced according to a melt method without adding any quencher, which comprises 30 to 70 % by mole of a constitution unit represented by formula (1) and 70 to 30 % by mole of a constitution unit represented by formula (2), and of which weight-averaged molecular weight by GPC is from 15,000 to 65,000,
B) at least one species of a mold release which is a partial ester formed of a C₁₀₋₂₀ monovalent fatty acid and glycerol, and
C) at least one species of a hindered phenol antioxidant: 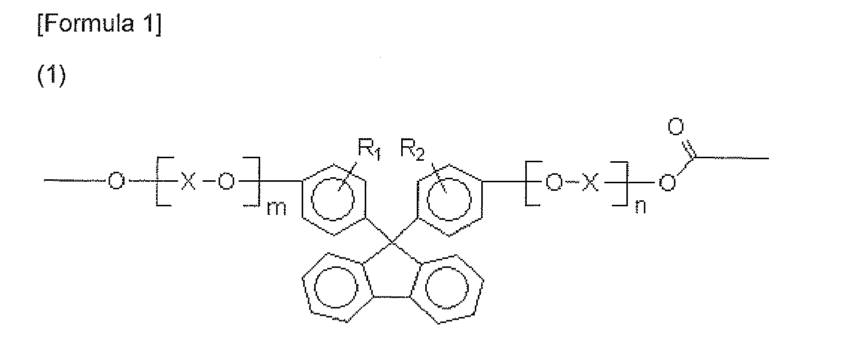 in formula (1), R¹ and R² each independently represent a hydrogen atom, C₁₋₁₀ alkyl group, C₆₋₁₀ cycloalkyl group or C₆₋₁₀ aryl group; X represents a C2-6 alkylene group which may be branched, C₆₋₁₀ cycloalkylene group or C₆₋₁₀ arylene group; and m and n each independently indicate a numerical value of from 1 to 5; 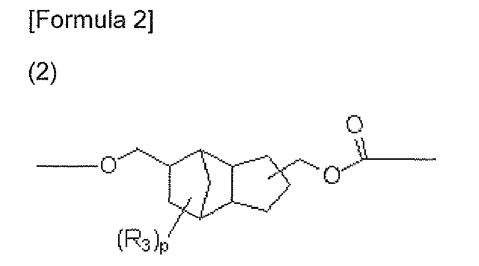 in formula (2), R³ represents a C₁₋₁₀ alkyl group, p indicates a numerical value of from 0 to 4, which indicates that p pieces of R³ may bond to any position of the tetracyclodecane ring.

2. The thermoplastic polymer composition according to claim 1, wherein the B) at least one species of a mold release is a glycerol monostearate or glycerol monolaurate.

3. The thermoplastic polymer composition according to claim 1 or 2, wherein the C) at least one species of a hindered phenol antioxidant is pentaerythrityl tetra kis[3-(3,5-d i-t-b utyl-4-hyd roxy phenyl)propionate].

4. The thermoplastic polymer composition according to any one of claims 1-3, comprising 0.001 to 0.5 parts by weight of the B) at least one species of a mold release with respect to 100 parts by weight of the A) a polycarbonate copolymer.

5. The thermoplastic polymer composition according to any one of claims 1-4, comprising 0.001 to 0.5 parts by weight of the C) at least one species of a hindered phenol antioxidant with respect to 100 parts by weight of the A) a polycarbonate copolymer.

6. A process for producing a molded product comprising using a thermoplastic polymer composition of any one of claims 1-5.

7. An optical lens formed of a thermoplastic polymer composition of any one of claims 1-5.
